(19) Europäisches Patentamt
European Patent Office
Office européen des brevets

(11) EP 0 881 787 A2

(12) **EUROPEAN PATENT APPLICATION**

(43) Date of publication:
02.12.1998 Bulletin 1998/49

(51) Int. Cl.⁶: **H04B 10/14**

(21) Application number: 98109643.1

(22) Date of filing: 27.05.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 30.05.1997 JP 141380/97

(71) Applicant: **Hitachi, Ltd.**
**Chiyoda-ku, Tokyo 101-8010 (JP)**

(72) Inventors:
• Sugita, Tatsuya
  Hitachi-shi, Ibaraki 316-0025 (JP)
• Maruo, Seiji
  Chitose-chi, Hokkaido 066-0027 (JP)

(74) Representative:
**Beetz & Partner**
**Patentanwälte**
**Steinsdorfstrasse 10**
**80538 München (DE)**

(54) **Light transmission apparatus using carrier wave**

(57) A light beam emitted from a semiconductor laser (30) is branched into at least two light beams by a coupler part (58). At least one of the branched light beams receives a Bragg reflection due to a surface acoustic wave (SAW) generated by a SAW transducer (70) provided on a piezoelectric substrate and the frequency of the reflected light beam is changed. Further, the branched light beams including the reflected light beam are joined in a light wave guide path (60, 37), and inputted into an optical fiber 20. The joined light beams generate a beat signal. A photodetector (32) to which the joined light beams inputted detects light data signals transmitted in the beat signal used as a carrier wave.

*FIG.1*

AGC : AUTOMATIC GAIN CONTROL

**Description**

BACKGROUND OF THE INVENTION

The present invention relates to an optical communication using an optical fiber, especially a light transmission method and a light transmission apparatus using the method in which a carrier wave is used.

A paper published in The Transactions of The Institute of Electronics, Information and Communication Engineers B-I, Vol. J78-B-I pp. 553 - 562 ( 1992 ), Japan, discloses a light distribution system realizing a CATV ( cable television ) network in which digital modulated signals modulated by a 16-quadrative amplitude modulation ( QAM ) method are used.

A conventional light distribution system in a CATV network uses the 16-quadrative amplitude modulation method which is a digital modulation method using a carrier wave, and as the carrier wave, a high frequency wave of 400 - 1000 MHz is used. Further, a single mode optical fiber having a vary small core diameter of less than 10 $\mu$m and a wide transmission bandwidth is used as the optical fiber.

However, the above-mentioned conventional light distribution system has had a problem that since the core diameter is very small, it is difficult to connect optical fibers to each other, or an optical fiber to another optical element. On the other hand, as for a multi-mode optical fiber having a large core diameter, particularly, a plastic optical fiber, although it is easy to connect optical fibers to each other, or an optical fiber to another optical element, such a multi-mode optical fiber has not been used as a transmission medium for an optical communication using a high frequency carrier wave since its transmission bandwidth is narrow.

SUMMARY OF THE INVENTION

The present invention has been achieved to solve the above mentioned problem, and an object of the present invention is to provide a light transmission method and a light transmission apparatus in which data signals are carried by a high frequency carrier wave by using an optical fiber having a comparatively large core diameter and a wide transmission bandwidth.

A first feature of the present invention to attain the above object is to provide a light transmission apparatus, wherein a light beam emitted from a light source is divided into at least two light beams, data signals to be transmitted are sent as light signals in the light beams by using means for changing a light frequency of at least one of the divided light beams and joining the divided light beams, and the joined light beams are inputted into an optical fiber.

A second feature of the present invention is to provide a light transmission apparatus having a light source for emitting a light beam to be inputted into an optical fiber, a drive circuit for driving the light source, and an input part for inputting data to be transmitted, the light transmission apparatus comprising: branching means for branching the light beam emitted from the light source into a plurality of light beams; frequency changing means for changing a light frequency of at least one of the branched light beams; and beam joining means for joining the branched light beams including at least one of the branched light beams, of which the light frequency has been changed; wherein the beam joining means joins the branched light beams so as to proceed in almost the same light path and inputs the joined light beams into an optical fiber.

A third feature of the present invention provides a light transmission apparatus having a photodetector for detecting an inputted light beam, a discrimination circuit for discriminating transmitted signals, and an output part for outputting the signals discriminated by the discrimination circuit, wherein the photodetector detects a beat signal generated by at least two light beams having different frequencies, which are joined in an optical path and inputted to the photodetector, and the discrimination circuit discriminates the transmitted signals by making use of the beat signal as a carrier wave of the transmitted signals.

BRIEF DESCRIPTION OF THE DRAWINGS

Fig. 1 is a schematic block diagram of a light transmission apparatus of an embodiment according to the present invention.

Fig. 2 is a schematic block diagram of a signal sending module of another embodiment according to the present invention.

Fig. 3 is a schematic block diagram of a signal receiving module of another embodiment according to the present invention.

Fig. 4 is a schematic block diagram of a signal sending module of further another embodiment according to the present invention.

Fig. 5 is a schematic block diagram of a signal receiving module of further another embodiment according to the present invention.

Fig. 6 is a schematic block diagram of a signal sending module of further another embodiment according to the present invention.

Fig. 7 is a perspective view of a signal receiving module of further another embodiment according to the present invention.

Fig. 8 is a schematic block diagram of a light transmission apparatus for digital image transmission of an embodiment according to the present invention.

DETAILED DESCRIPTION OF THE EMBODIMENTS

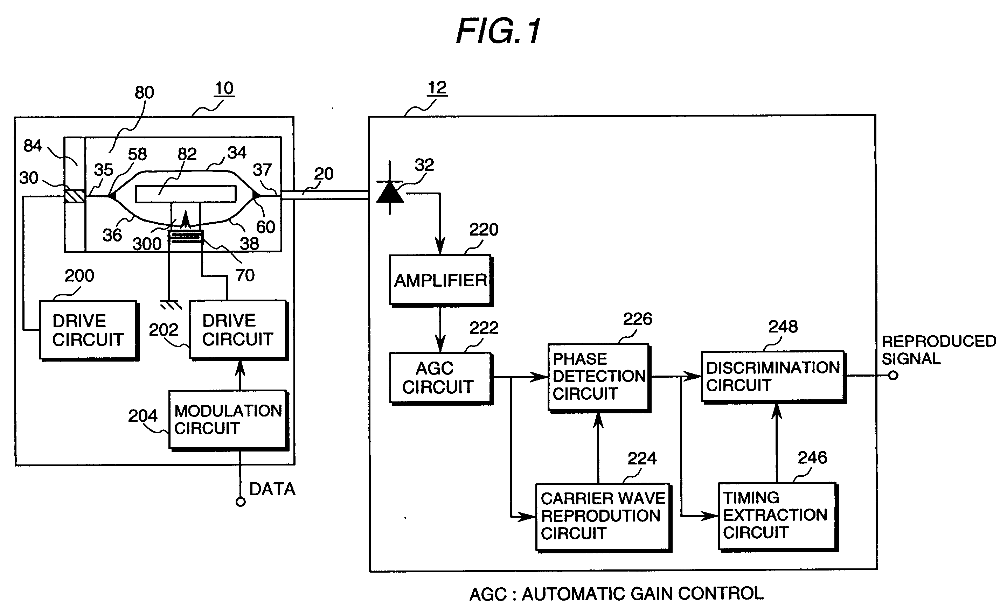

In the following, an embodiment according to the present invention will be explained with reference to Fig. 1. Fig. 1 is a schematic block diagram of a light transmission apparatus of this embodiment.

At first, a signal sending module 10 is explained. In this embodiment, a semiconductor laser 30 is used as a light source. The semiconductor laser 30 is fixed on a substrate 84, and continuously driven by a drive circuit 200.

A light beam emitted from the semiconductor laser 30 is inputted into a single mode light wave guide path 35 formed on a piezoelectric substrate 80.

In this embodiment, a substrate made of $LiNbO_3$ is used as the piezoelectric substrate 80. The light beam inputted into the light wave guide path 35 is branched and inputted into a light wave guide path 34 and a light wave guide path 36 by a coupler part 58 which is light branching means.

On the piezoelectric substrate 80, a surface acoustic wave ( hereafter referred to as SAW ) transducer 70 which is an photoacoustic element is formed. The transducer 70 is driven by a SAW transducer drive circuit 202 to generate a SAW 300 at the piezoelectric substrate 80. A light beam outputted from the light wave guide path 36 receives a Bragg reflection caused by the SAW 300. A reflected light beam is inputted into a light wave guide path 38 provided adjacently to an output end of the light wave guide path 36. The light beam transmitted in the light wave guide path 38 and the light beam transmitted in the light wave guide path 34 are joined in a light wave guide path 37 by a coupler part 60 which is beam joining means, and the joined light beams are inputted into an optical fiber 20. Digital data signals inputted from an input terminal to the signal sending module 10 are converted to 2-PSK ( Phase Shift Keying ) signals which are obtained by changing the inputted digital data signals by $\pi/2$ corresponding to each value 0 or 1 in the inputted digital data signals, and a drive frequency of the SAW 300 is modulated as base band signals by using the 2-PSK signals.

Signals outputted from the modulation circuit 204 is inputted to a SAW transducer drive circuit 202, and drive the SAW transducer 70. Denoting the frequency of the SAW 300 generated by the SAW transducer 70 and the light frequency of the light beam emitted from the semiconductor laser 30 by $f_{SAW}$ and $f_{beam}$ ( $f_{beam} = c / \lambda$ , where $\lambda$: a light wavelength of the light beam in a vacuum, and c: the speed of light in a vacuum ), respectively, the light frequency of the light beam which received the Bragg reflection due to the SAW 300 is changed to ( $f_{SAW} + f_{beam}$ ).

That is, the SAW transducer 70 acts as wavelength conversion means. Thus, the light beam having the frequency of $f_{beam}$ and the light beam having the frequency of ( $f_{SAW} + f_{beam}$ ) are inputted into the optical fiber 20 together. In the piezoelectric substrate 80, a separation groove 82 is provided to prevent the SAW 300 from affecting the light beam in the light wave guide path 34.

Next, a signal receiving module 12 is explained. The light beam outputted from the optical fiber 20 is detected by a photodetector 32. The two light beams having the respective frequencies of $f_{beam}$ and ( $f_{SAW} + f_{beam}$ ) are inputted to the photodetector 32, and a beat signal of the frequency $f_{SAW}$ is generating in the signal detected by the photodetector 32.

Since the light beam of the frequency $f_{SAW}$ is modulated by the 2-PSK way in the signal sending module 10, the beat signal detected by the photodetector 32 is detected as 2-PSK modulated digital signals which are carried on the carrier wave of the frequency $f_{SAW}$.

The signals detected by the photodetector 32 are detected by a general 2-PSK modulated signal detection circuit. Electrical signals outputted from the photodetector 32 are amplified by an amplifier 220, and set to a preset signal level by a automatic gain control ( hereafter referred to as AGC ) circuit 222.

Signals outputted from the AGC circuit 222 are inputted to a carrier wave reproduction circuit 224, and reproduced as a sine wave of the frequency $f_{SAW}$. Further, the sine wave of the frequency $f_{SAW}$ is outputted from the carrier wave reproduction circuit 224.

On the other hand, the signal outputted from the AGC circuit 222 is also inputted to a phase detection circuit 226, and phases of the inputted signal are detected. Thus, the base band signals are reproduced, based on the reproduced carrier wave outputted from the carrier wave reproduction circuit 224.

The timing in phase changing of the inputted digital data signals is extracted by a timing extraction circuit 246, based on the reproduced base band signal, and a value of 0 or 1 in the digital data signals is determined. Further, the determined values are outputted as reproduced digital signals from an output terminal of the signal receiving module 12.

In accordance with the present invention, it is possible to use a wave having the high frequency beyond the transmission band width of an optical fiber, by transmitting two light beams of different wavelengths in an optical fiber and using a beat signal generated in the optical fiber as a carrier wave.

It is because the band width of light signals to be transmitted is not restricted by the transmission band width of an optical fiber since the intensity of light proceeding in the optical fiber is not modulated by a carrier wave. According to this embodiment, it is possible correctly to determine the difference between wavelengths of two light beams transmitted together, which is necessary to extract the beat signal accurately, by branching a light beam emitted from one light source into two light beams, and joining and transmitting the branched light beams in an optical fiber after the wavelength of one of the branched light beams is modulated.

As shown in this embodiment, since phase modulated signals can be detected, based on a carrier wave signal clearly shaped by the carrier wave reproduction circuit 224, the sensitivity which is evaluated with the power ratio of carrier wave signal to noise can be improved by approximately 8 dB in comparison with the sensitivity attained by an amplitude modulation usually used for an optical communication

Therefore, if the same quantity of light is inputted in an optical fiber, it is possible to make the transmission distance of the optical fiber longer by using the phase modulation method according to this embodiment than by using the amplitude modulation method.

In this embodiment, a plastic optical fiber having a core diameter of about 1 mm or a multi-mode optical fiber having a core diameter of more than 50 $\mu$m is used as the optical fiber.

Further, it is desirable to use an optical fiber of a small wavelength dispersion in the present invention. If the optical fiber has a wavelength dispersion, the sift between the two wave guide paths increases as the transmission distance increases. Consequently, the amplitude of the beat signal detected by the photodetector 32 decreases.

Therefore, if the optical fiber has a wavelength dispersion, it is desirable to make the transmission distance short. In other words, if the present invention is applied to an optical fiber having the large transmission loss, which is used for only a short transmission distance, for example, a plastic optical fiber, the advantage to elongate the transmission distance of such an optical fiber becomes large.

Since LiNbO$_3$ is used for the piezoelectric substrate 80 in this embodiment, the light guide paths are formed by a Ti diffusion method or a proton exchange method which are usually used.

The width of the light guide paths are set so that the transmission mode of the light beams becomes the single mode. Moreover, a metal film is formed on the piezoelectric substrate 80, and the SAW transducer 70 is formed by etching the metal film as a comb-shaped film. A ZnO thin film can be also used as Piezoelectric material for forming the substrate 80, in addition to LiNbO$_3$.

The light guide paths can be formed not only in the piezoelectric material plate as shown in this embodiment, but also in a transparent thin film formed on the piezoelectric material plate to separate the SAW transducer part and the light wave guide path part. Moreover, it is possible to separate the SAW transducer part and the light wave guide path part by forming the light wave guide paths in a transparent film and the SAW transducer on a piezoelectric thin film formed on the transparent film.

In this embodiment, the frequency $f_{SAW}$ of the carrier wave is set to 700 - 1300 MHz, and the data transmission rate is 100 - 622 Mbps. Further, a waveform equalization circuit can be provided after the phase detection circuit 226.

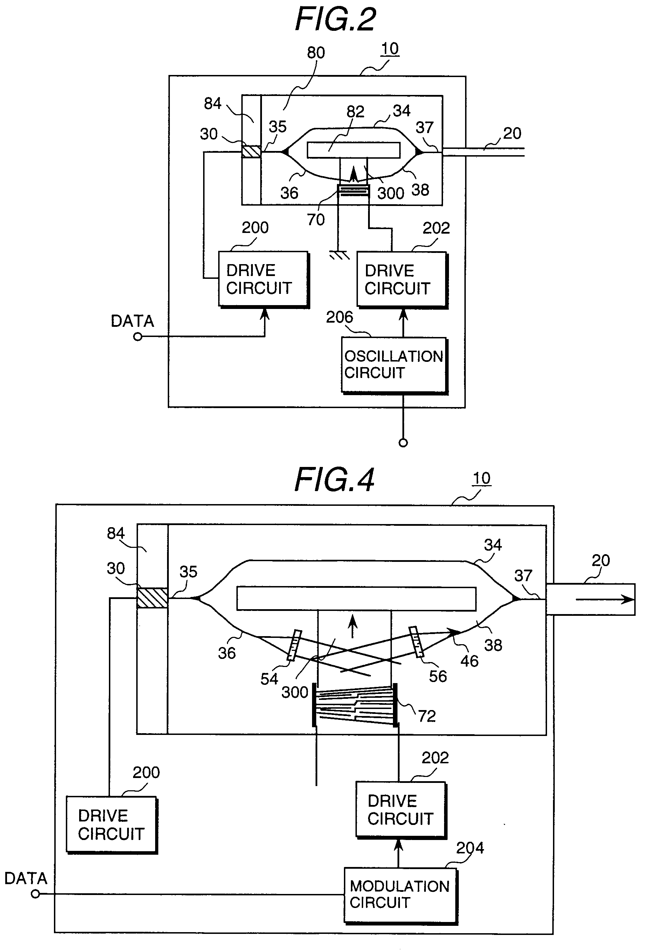

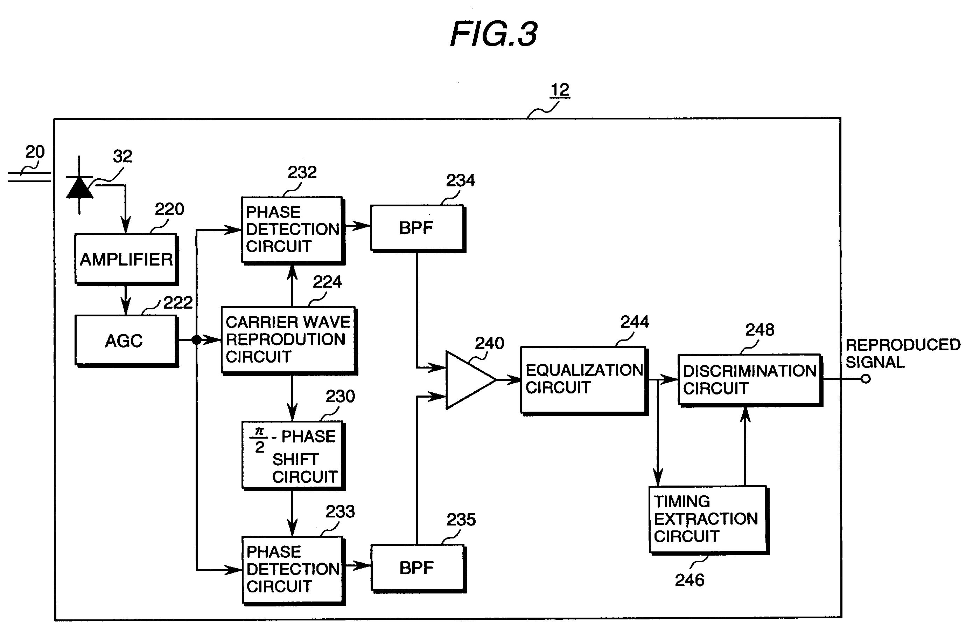

In the following, a light transmission apparatus of another embodiment will be explained with reference to Fig. 2 and Fig. 3.

Fig. 2 shows a schematic block diagram of a signal sending module of this embodiment. In this embodiment, the amplitude modulation ( hereafter referred to as ASK: Amplitude Shift Keying ) is used. Digital data signals inputted to the signal sending module 10 are further inputted to the semiconductor laser drive circuit 200.

The semiconductor laser 30 is turned on and turned off corresponding to the inputted data signals by the semiconductor laser drive circuit 200. The semiconductor laser 30 is fixed on the substrate 84.

A light beam emitted from the semiconductor laser 30 is inputted into a single mode light wave guide path 35. LiNbO$_3$ is used for the piezoelectric substrate 80.

The light beam inputted into the light wave guide path 35 is branched and inputted into the light wave guide paths 34 and 36. On the piezoelectric substrate 80, the SAW transducer 70 is formed. The transducer 70 is driven by a SAW transducer drive circuit 202 to generate a SAW 300 at the piezoelectric substrate 80 corresponding to a RF signal of a constant frequency, which is outputted from an oscillation circuit 206.

The light beam outputted from the light wave guide path 36 receives a Bragg reflection due to the SAW 300. A reflected light beam is inputted into the light wave guide path 38 provided adjacently to the output end of the light wave guide path 36.

The light beam transmitted in the light wave guide path 34 and the light beam transmitted in the light wave guide path 38 are joined in the light wave guide path 37, and outputted into the optical fiber 20. Therefore, the two light beams of the frequency $f_{beam}$ and the frequency ( $f_{beam} + f_{SAW}$ ) are inputted into the optical fiber 20.

Next, a receiving module is explained. Fig. 3 shows a schematic block diagram of the receiving module 12 of this embodiment.

A light beam outputted from the optical fiber 20 is detected by the photodetector 32. The two light beams having the respective frequencies of $f_{beam}$ and ( $f_{SAW} + f_{beam}$ ) are inputted to the photodetector 32, and a beat signal of the frequency $f_{SAW}$ is generating in the signal detected by the photodetector 32.

Therefore, the photodetector 32 detects the beat signal as a carrier wave, of which the amplitude changes corresponding to the input data signals.

The wave signal outputted from the photodetector 32 is amplified by the amplifier 220, and set to a preset signal level by the AGC circuit 222.

The wave signal outputted from the AGC circuit 222 is inputted to the carrier wave reproduction circuit 224, and outputted as a sine wave signal of the frequency $f_{SAW}$ from the carrier wave reproduction circuit 224.

On the other hand, the signal outputted from the AGC circuit 222 is also inputted to phase-sensitive detection circuits 232 and 233.

In the phase-sensitive detection circuit 232, timing signals are generated, based on the reproduced carrier wave outputted from the carrier wave reproduction circuit 224, and data signals to be reproduced are detected, coninciding with the generated timing signals.

Similarly, in the phase-sensitive detection circuit 233, data signals to be reproduced are detected, coinciding with timing signals which are generated, based on a carrier wave of which the phase is shifted by $\pi/2$ from the phase of the reproduced carrier wave outputted from the carrier wave reproduction circuit 224 by a $\pi/2$-phase shift circuit 230.

The signals outputted from the phase-sensitive detection circuits 232 and 233 pass through respective band-pass filters 234 and 235, each of which has the central frequency in the frequency of the base band signals, and the carrier wave component accompany with each of the signals outputted from the phase-sensitive detection circuits 232 and 233 is removed. Thus, signals of the base band frequency are reproduced as for the signals outputted from each of the phase-sensitive detection circuits 232 and 233.

Further, by summing the signals outputted from the band pass filters 234 and 225 with a summation circuit 240, the base band signals are reproduced.

The waveform of the reproduced base band signal is shaped by an equalization circuit 244, and the timing is extracted by the timing extraction circuit 246, based on the waveform shaped base band signals. Moreover, the signals outputted from the equalization circuit 244 are inputted to the discrimination circuit 248, and a value of 0 or 1 in the input digital data signals is determined, based on the timing signal from the timing extraction circuit 246. Further, the determined values are outputted as reproduced digital signals from an output terminal of the signal receiving module 12.

In accordance with this embodiment, the inputted signals are reproduced by the phase-sensitive detection circuits 232 and 233, based on the carrier wave signal of which the waveform is clearly shaped by the carrier wave reproduction circuit 224. Further, noises mixing with the reproduced signal are smoothed and reduced by each band pass filter 234 or 233. Therefore, the detection sensitivity of signals can be improved.

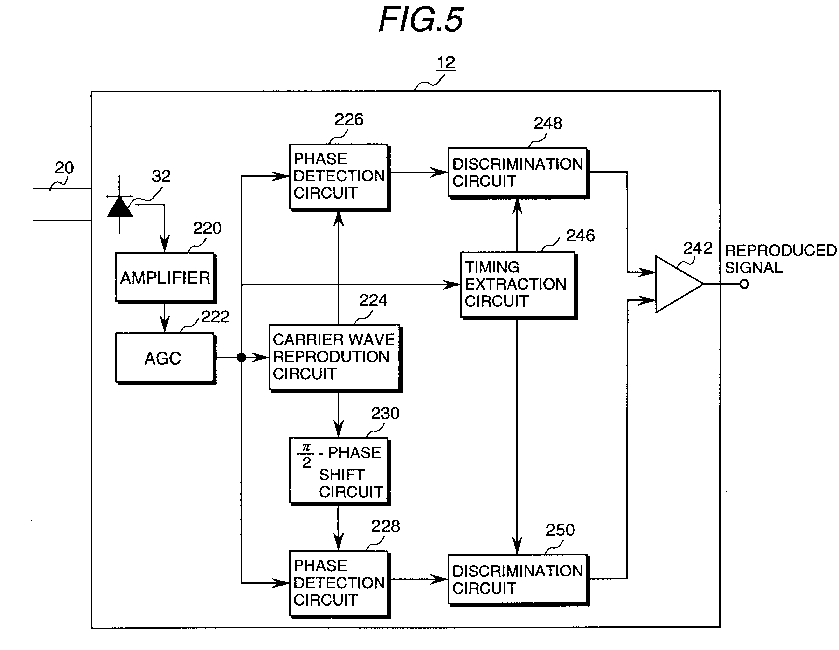

In the following, a signal sending module of another embodiment will be explained with reference to Fig. 4.

Fig. 4 shows a schematic block diagram of the signal sending module of this embodiment. The semiconductor laser 30 is fixed on the substrate 84, and continuously driven by the semiconductor laser drive circuit 200.

A light beam emitted from the semiconductor laser 30 is inputted into the single mode light wave guide path 35 formed on the piezoelectric substrate 80. LiNbO$_3$ is used for the piezoelectric substrate 80.

The light beam inputted into the light wave guide path 35 is branched and inputted into the light wave guide path 34 and the light wave guide path 36. On the piezoelectric substrate 80, the chirp SAW transducer 72 is formed.

Digital data signals inputted to the signal sending module 10 can be modulated with an arbitrary modulation method by the modulation circuit 204. The SAW 300 modulated by the chirp SAW transducer 72 driven the SAW transducer drive circuit 202 is generated on the piezoelectric substrate 80, based on the inputted digital data signals modulated by a modulation circuit 204.

A light beam outputted from the light wave guide path 36 is changed to an almost parallel light by a grating lens 54, and the parallel light receives a Bragg reflection due to the SAW 300.

A reflected parallel light is converged to a beam by a grating lens 56, and the converged light beam is inputted into a mode field diameter convering light wave guide path 46 in which the diameter of the light wave guide path at the light input side is formed to a larger one. Further, the light beam inputted into the light wave guide path 46 is led to the light wave guide path 38.

The light beam transmitted in the light wave guide path 38 and the light beam transmitted in the light wave guide path 34 are joined in the light wave guide path 37, and inputted into the optical fiber 20. Thus, similarly in the above embodiments, the two light beams of different wavelengths $f_{beam}$ and $(f_{beam} + f_{SAW})$ are inputted into the optical fiber 20.

In this embodiment, since the chirp SAW transducer 72 is used as a SAW transducer, a SAW having a wide frequency range can be driven. Therefore, a signal having a wide frequency band can be processed as a base band.

Thus, it is possible to transmit not only digital data signals but also analog signals which received a frequency modulation. Further, since the light beam outputted from the light wave guide path 36 is changed to the parallel light by the grating lens 54, the efficiency in the Bragg reflection due to the SAW is increased. Moreover, by using the mode field diameter converting light wave guide path 46, even if the input angle of the parallel light to be inputted to the grating lens 56 varies, the converged light beam can be efficiently led to the light wave guide path 38.

Next, a signal receiving module in this embodiment is explained with reference to Fig. 5.

Fig. 5 shows a schematic block diagram of the signal receiving module 12 in this embodiment. This module 10 receives each multivalued data signal which is modulated by a 4-PSK modulation method in the signal sending module 10 shown in Fig. 4. A light beam outputted from the optical fiber 20 is inputted to the photodetector 32. The photodetector 32 detects the data signal carried in the carrier wave of the frequency $f_{SAW}$.

Data signals outputted from the photodetector 32 are amplified by the amplifier 220, and set to a preset signal level by the AGC circuit 222. Further, data signals outputted from the AGC circuit 222 are inputted to the carrier wave reproduction circuit 224, and outputted as a sine signal of the frequency $f_{SAW}$.

Further, the data signals outputted from the AGC circuit 222 are inputted to phase detection circuits 226 and 228. The phase detection circuit 226 detects the modulated input data signals by performing phase detection processing, based on the reproduced carrier wave outputted from the carrier wave reproduction circuit 224.

Similarly, the phase detection circuit 228 detects the modulated input data signals by performing phase detection processing also, based on a carrier wave which is obtained by shifting, by $\pi/2$, the carrier wave reproduced by the carrier wave reproduction circuit 224, by the $\pi/2$ phase shift circuit 230.

Thus, two independent groups of data signals obtained by orthogonal transformation of the inputted data signals in the 4-PSK modulation are extracted separately by the phase detection circuit 226 and 228, respectively. The respective groups of the data signals outputted from the phase detection circuit 226 and 228 are inputted to the discrimination circuits 248 and 250, respectively. Each of the discrimination circuits 248 and 250 determines the value of 0 or 1 of each group of the data signals, based on the timing signals extracted from the data signals outputted from the AGC circuit 222, by using the timing extraction circuit 246, and outputs the detected values as shaped digital reproduced data signals.

The reproduced digital data signals outputted from the discrimination circuits 248 and 250 are alternatively joined by the parallel-serial conversion circuit 242, and the joined data signals are outputted as reproduced input digital data signals.

In accordance with this embodiment, with using a multivalued digital transmission, it is possible to make use of the base band frequencies more efficiently than without using a multivalued digital transmission, and to increase the transmission capacity by the effects of the multivalued digital transmission.

Applying the multivalued digital transmission in this embodiment brings a large advantage to a multi-mode optical fiber having a core diameter of more than 50 $\mu$m and a narrow band width, especially to a plastic optical fiber having a core diameter of more than 500 $\mu$m.

In the signal sending module 10 shown in Fig. 4, by realizing light quantity changing in the semiconductor laser 30 together with the frequency modulation, it is possible to perform a multivalued digital transmission in which an amplitude and phase modulating method, for example, a QAM modulation method, is carried out.

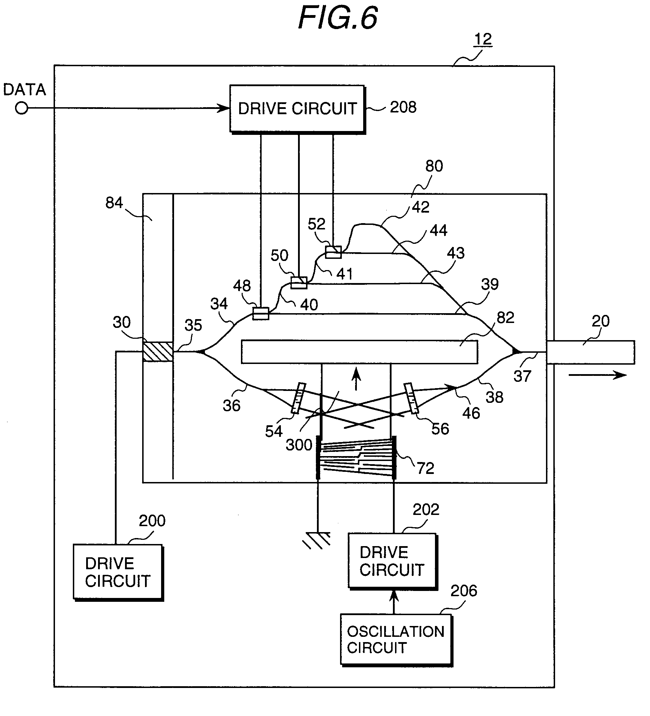

In the followng, a signal sending module of another embodiment will be explained with reference to Fig. 6.

Fig. 6 shows a schematic block diagram of the signal sending module 10 of this embodiment. The semiconductor laser 30 is fixed on the substrate 84, and continuously driven by the semiconductor laser drive circuit 200.

A light beam emitted from the semiconductor laser 30 is inputted into the single mode light wave guide path 35 formed on the piezoelectric substrate 80. LiNbO$_3$ is used for the piezoelectric substrate 80.

The light beam inputted into the light wave guide path 35 is branched and inputted into the light wave guide path 34 and the light wave guide path 36. On the piezoelectric substrate 80, the chirp SAW transducer 72 is formed.

A SAW 300 is generated on the piezoelectric substrate 80 by the SAW transducer 72 driven by the SAW transducer drive circuit 202, based on a signal of a constant frequency outputted from the oscillation circuit 206.

A light beam outputted from the light wave guide path 36 is changed to an almost parallel light by a grating lens 54, and the parallel light receives a Bragg reflection due to the SAW 300.

A reflected parallel light is converged to a beam by a grating lens 56, and the converged light beam is inputted into the mode field diameter converting light wave guide path 46 in which the diameter of the light wave guide at the light input side is formed to a larger one. Further, the light beam inputted into the mode field converting light wave guide path 46 is led to the light wave guide path 38.

Further, the path of the light beam inputted into the light wave guide 34 is switched to a light wave guide path 39 or a light wave guide path 40 by a light switch 48. Similarly, the path of the light beam inputted into the light wave guide 40 is switched to a light wave guide path 41 or a light wave guide path 43 by a light switch 50. Moreover, the path of the light beam inputted into the light wave guide 41 is switched to a light wave guide path 42 or a light wave guide path 44 by a light switch 52.

The light beams transmitted in the respective light wave guide path by the switching operations are joined again, and finally inputted into the optical fiber 20 via the light wave guide path 37.

The light beam inputted into the light wave guide tube 34 is transmitted in one of the four light wave guide paths 39, 43, 44, and 42, corresponding to the switching states of the light switches 48, 50, and 52, and each light wave guide path has a light passing length different from that in the other light wave guide paths.

The length difference between each two neighboring paths of the four light wave guide paths is set to a length equivalent to a 1/4 of one period in the carrier wave. Therefore, by selecting the path in which the light beam is transmitted, with switching the light switches 48, 50, and 52, which is executed by a light switch drive circuit 208, based on data signals inputted to the signal sending module 10, a phase modulation of the light beam inputted into the optical fiber 20 is performed, in which the 1/4 period is used as a phase shift unit. By using the above-mentioned phase shift means, the 4-PSK modulation is carried out.

As each of the light switches 48, 50, and 52 in this embodiment, a directional coupler light switch is used, which is composed by a pair of electrodes which are provided on a pair of two neighboring light wave guide paths, respectively, a state in each the pair of the electrodes being switched by changing the voltage applied to the electrode.

In this embodiment, since the carrier wave is modulated by using the light switches with high-speed switching, the power consumption can be reduced more in comparison with the carrier wave modulation performed by using the SAW transducer.

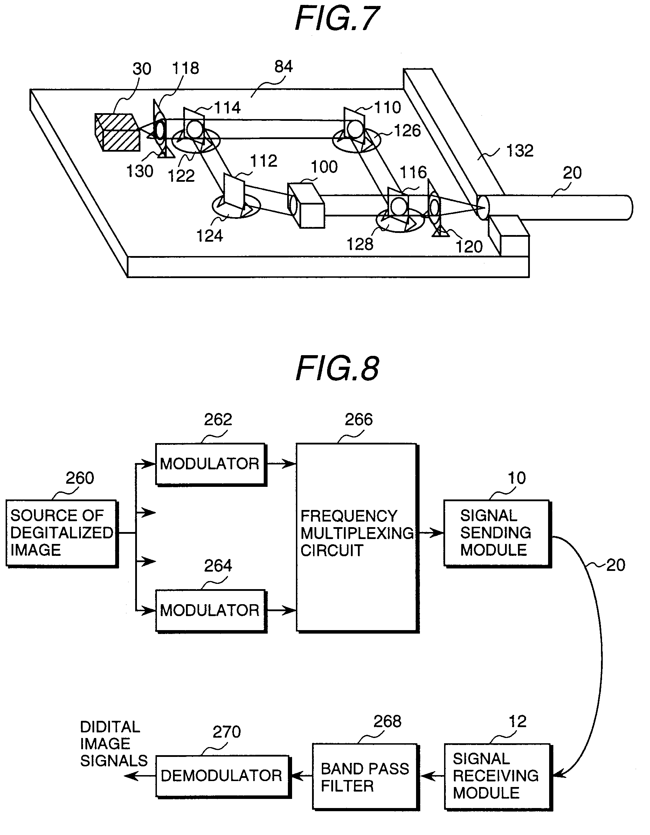

In the following, a signal sending module of another embodiment will be explained with reference to Fig. 7. Fig. 7 shows a perspective view of the sending module of this embodiment. The semiconductor laser 30 is fixed on the substrate 84. A light beam emitted from the semiconductor laser 30 is changed to a parallel light by a Fresnel lens 118, and inputted to a half mirror 114. A parallel light penetrating the half mirror 114 is reflected by a mirror 110, further by a half mirror 116. Further, the reflected parallel light is converged by a Fresnel lens 120, and inputted into the optical fiber 20. On the other hand, a parallel light reflected by the half mirror 114 is reflected by a mirror 112, and modulated by a photoacoustic element 100. Further, the modulated parallel light penetrating the half mirror 116 is converged by the Fresnel lens 120, and inputted into the optical fiber 20.

The photoacoustic element 100 is driven by a photoacoustic element drive circuit to modulate the phase of the light, corresponding to data signals inputted to the signal sending module. The optical fiber 20 is positioned and fixed by an optical fiber fixing part 132. Since the parallel light is converged by the Fresnel lens 120, and inputted into the optical fiber 20, the high accuracy in positioning the optical fiber 20 is not required. The lenses, the mirrors, and the half mirrors, which are used in this embodiment, are produced by using a photolithography technique and a micro-machining technique which are described, for example, at pages 13 - 15 in " NIKKEI ELECTRONICS ", published on thirteenth March, 1995.

A Si film is used for the mirrors, and $SiO_2$ is used for the lenses and the half mirror. One side length in each of the above elements is 100 - 1000 $\mu m$.

The Fresnel lens 118 stands with being supported by a support member 130. Similarly, each of the other mirrors, the half mirrors, and the Fresnel lenses, stand with being supported by each support member.

Further, the respective mirrors 110 and 112, and half mirrors 114 and 116, are fixed on respective actuators 126, 124, 122, and 128. Thus, the reflection direction of each reflected light is adjusted by rotating each of the actuators 126, 124, 122, and 128.

In accordance with this embodiment, since it is not necessary to input the light beam emitted from the semiconductor laser 30 in the single mode wave guide, and the parallel light is converged by the Fresnel lens 120, the light beam from the laser 30 can be efficiently used.

In the following, a digital image light transmission apparatus of an embodiment in which the light transmission apparatus according to the present invention is applied will be explained with reference to Fig. 8.

Fig. 8 shows a schematic block diagram of the digital image light transmission apparatus of this embodiment. By using the light transmission apparatus according to the present invention and a plurality of carrier waves having different frequencies, it is possible to transmit a plurality of groups of information separately, each group being carried in one of the carried waves.

Therefore, by transmitting a plurality of groups of digital images data in respective carrier waves of different frequencies, multichannel images can be simultaneously transmitted. Thus, this embodiment can be applied to a digital broadcasting for a cable television using optical fibers. That is, Signals from a source of digital images are modulated by each of modulators 262, 264, and so forth for each channel, and the modulated digital image signals for a plurality of channels are multiplexed by a frequency-multiplexing circuit 266. Further, the multiplexed signals are sent by the signal sending module 10. At the signal receiving side, one of the plurality of the carrier waves is selected from the signals received by the signal receiving module 12 by using a variable-band pass filter 268. Further, based on the selected carrier wave, data signals for one selected channel are demodulated by a demodulator 270, and transmitted digital image signals are extracted.

Furthermore, the light transmission apparatus according to the present invention is applicable to a multiple data transmission by using a code division multiple access ( CDMA ) method. In this case, the SAW transducer is driven by using CDMA modulation applied signals, and the modulated signals are sent. At the signal receiving side, a circuit for demodulating the sent modulated signal is provided.

As mentioned above, in accordance with the present invention, a light beam emitted from one light source is branched to two light beams, and after the light frequency of one in the two light beams is changed, the two light beams are joined. A beat signal generated in the joining of the two light beams is used as a carrier wave, and the carrier wave is detected by a photodetector. Thus, even if an optical fiber having a large core diameter, of which a transmission band width is narrow, is used, it becomes possible to provide a light transmission method and a light transmission apparatus using the method, which can transmit optical information by using the high frequency carrier wave.

**Claims**

1. A light transmission apparatus, wherein a light beam emitted from a light source (30) is divided into at least two light beams, data signals to be transmitted are sent as light signals in said light beams by using means (70) for changing a light frequency of at least one of said divided light beams and joining said divided light beams, and said joined light beams are inputted into an optical fiber (20).

2. A light transmission apparatus having a light source (30) for emitting a light beam to be inputted into an optical fiber (20), a drive circuit (200) for driving said light source, and an input part (202, 204) for inputting data signals to be transmitted, said light transmission apparatus comprising: branching means (58) for branching said light beam emitted from said light source into a plurality of light beams; frequency changing means (70) for changing a light frequency of at least one of said branched light beams; and beam joining means (60) for joining said branched light beams including said at least one of said branched light beams, of which the light frequency has been changed; wherein said beam joining means (60) joins said branched light beams so as to proceed in almost the same light path and inputs said joined light beams into an optical fiber (20).

3. A light transmission apparatus according to claim 2, wherein a photoacoustic element is used for said frequency changing means (70).

4. A light transmission apparatus according to claim 2, wherein an intensity of said light beam emitted from said light source is modulated corresponding to data signals inputted to said input part (202, 204).

5. A light transmission apparatus according to claim 2, wherein a core diameter of said optical fiber (20) is more than 50 $\mu$m.

6. A light transmission apparatus according to claim 2, wherein a phase of a high frequency signal inputted in said frequency changing means (70) is modulated corresponding to data signals inputted to said input part (202, 204).

7. A light transmission apparatus according to claim 2, wherein said modulation of a phase of a high frequency signal inputted in said frequency changing means (70) is performed in a multivalued signal way.

8. A light transmission apparatus having a photodetector (32) for detecting an inputted light beam, a discrimination circuit (248) for discriminating transmitted data signals, and an output part for outputting said data signals discriminated by said discrimination circuit, wherein said photodetector (32) detects a beat signal generated by at least two light beams having different frequencies, which are jointed in a light path and inputted to said photodetector (32), and said discrimination circuit (248) discriminates said transmitted data signals by making use of said beat signal as a carrier wave of said transmitted data signals.

*FIG.1*

REPRODUCED SIGNAL

248 DISCRIMINATION CIRCUIT

246 TIMING EXTRACTION CIRCUIT

226 PHASE DETECTION CIRCUIT

224 CARRIER WAVE REPRODUTION CIRCUIT

220 AMPLIFIER

222 AGC CIRCUIT

32

12

20

10

80

84

30

35

58

82

34

37

60

38

70

36

300

202

200 DRIVE CIRCUIT

204 MODULATION CIRCUIT

DATA

DRIVE CIRCUIT

AGC : AUTOMATIC GAIN CONTROL

## FIG.2

## FIG.4

# FIG.3

EP 0 881 787 A2

## FIG.5

EP 0 881 787 A2

## FIG.6

# FIG.7

# FIG.8